# EUROPEAN PATENT SPECIFICATION

(11) **EP 3 366 556 B1**
(45) Date of publication and mention of the grant of the patent: **12.05.2021**
(21) Application number: 18154571.6
(22) Date of filing: 01.02.2018
(51) Int. Cl.: B60Q 1/04, B60Q 1/26, B62J 6/02, B60Q 1/00

(54) **FRONT LIGHTING OF A STRADDLED VEHICLE**
GRÄTSCHSITZFAHRZEUG
VÉHICULE À ENFOURCHER

(30) Priority: 28.02.2017 JP 2017036623
(43) Date of publication of application: 29.08.2018
(73) Proprietor: Yamaha Hatsudoki Kabushiki Kaisha, Iwata-shi Shizuoka 438-8501 (JP)
(72) Inventor: OKABE, Toshihiko, Iwata-shi, Shizuoka 438-8501 (JP)
(74) Representative: Grünecker Patent- und Rechtsanwälte PartG mbB

(56) References cited:
- EP-A1- 2 792 585
- EP-A1- 3 000 699
- EP-A1- 3 037 331
- DE-A1- 10 033 591
- US-A1- 2006 193 143

## Description

The present invention relates to a straddled vehicle according to the preamble of independent claim 1. Such a straddled vehicle can be taken from the prior art document EP 3 037 331 A1.

In a front part of a straddled vehicle such as a motorcycle, a position lamp is provided together with a head lamp. For example, in a straddled vehicle described in TW 201625441 A, a front cover is provided forwardly of a head pipe. In the case where the vehicle is viewed in a side view of the vehicle, the front cover has an outer shape that spreads obliquely, rearwardly and upwardly and also spreads obliquely, rearwardly and downwardly from a tip portion. That is, the front cover has a shape that is pointed forwardly. The head lamp is provided at the tip portion of the front cover. The pair of respective position lamps is provided leftwardly and rightwardly of the headlamp.

In order to improve conspicuousness of a straddled vehicle, it is required that conspicuousness of a headlamp in the case where the vehicle is viewed from a position farther forward than the vehicle is ensured, and that conspicuousness of a position lamp in the case where the vehicle is viewed from a position farther leftward or rightward than the vehicle is improved. In the above-mentioned straddled vehicle, the front cover has a shape that is pointed forwardly. Therefore, the pair of position lamps is easily formed at the front cover to respectively extend in a front-and-rear direction and a left-and-right direction, that is, a horizontal direction. Thus, conspicuousness of the pair of position lamps is improved.

On the other hand, there is a request to reduce a size of the front cover in the straddled vehicle. As such, it is possible to reduce a size of a front part of the vehicle including the front cover in the front-and-rear direction by forming a substantially flat front surface of the front cover, for example. Thus, an operating feeling of a handle by a rider can be improved. However, in this case, there is a limit to a length of the pair of position lamps in the front-and-rear direction. Therefore, it is difficult to improve conspicuousness of the pair of position lamps.

An object of the present invention is to provide a straddled vehicle in which a size of a front part of the vehicle can be reduced in a front-and-rear direction and of which conspicuousness can be improved.

According to the present invention said object is solved by a straddled vehicle having the features of independent claim 1. Preferred embodiments are laid down in the dependent claims.

A straddled vehicle according to one aspect includes a head pipe, a front cover a headlamp having a first light emission surface, and a pair of left and right position lamps respectively having second light emission surfaces, wherein the front cover has a front surface portion arranged forwardly of the head pipe in a vehicle front-and-rear direction, a front edge of the front surface portion in a side view of the vehicle extends along a first virtual line that is in parallel with a central axis of the head pipe in the side view of the vehicle at a position farther forward than the head pipe, a first light emission surface of the headlamp is provided at the front surface portion of the front cover, a second light emission surface of the left position lamp may be provided at the front surface portion of the front cover at a position farther leftward than the first light emission surface and spaced apart from the first light emission surface in a front view of the vehicle, a second light emission surface of the right position lamp is provided at the front surface portion of the front cover at a position farther rightward than the first light emission surface and spaced apart from the first light emission surface in the front view of the vehicle, each second light emission surface extends in a top-and-bottom direction in the front view of the vehicle and is larger than the first light emission surface in the top-and-bottom direction, in the front view of the vehicle, a length of each second light emission surface in the top-and-bottom direction is larger than a width of each second light emission surface in a vehicle left-and-right direction, in the case where the front surface portion is viewed in a direction that is inclined by 45 degrees with respect to a vertical plane extending in the vehicle front-and-rear direction from a position obliquely farther leftward and forward than the vehicle, an apparent area of the first light emission surface is larger than an apparent area of the second light emission surface of the left position lamp, in the case where the front surface portion is viewed in a direction that is inclined by 45 degrees with respect to the vertical plane extending in the vehicle front-and-rear direction from a position obliquely farther rightward and forward than the vehicle, an apparent area of the first light emission surface is larger than an apparent area of the second light emission surface of the right position lamp, in a left side view of the vehicle, an apparent area of the second light emission surface of the left position lamp is larger than an apparent area of the first light emission surface, and in a right side view of the vehicle, an apparent area of the second light emission surface of the right position lamp is larger than an apparent area of the first light emission surface.

In the straddled vehicle, the front surface portion of the front cover has an outer shape that is substantially in parallel with the central axis of the head pipe and substantially flat in the side view of the vehicle, so that the size of the front cover in the front-and-rear direction can be reduced.

Further, in the case where the front surface portion is viewed in a direction that is inclined by 45 degrees with respect to a vertical plane extending in the front-and-rear direction from a position obliquely farther leftward and forward than the vehicle, the apparent area of the first light emission surface is larger than the apparent area of the second light emission surface of the left position lamp. In the case where the front surface portion is viewed in a direction that is inclined by 45 degrees with respect to the vertical plane extending in the front-and-rear direction from a position obliquely farther rightward and forward than the vehicle, the apparent area of the first light emission surface is larger than the apparent area of the second light emission surface of the right position lamp. Thus, conspicuousness of the headlamp that emits light forwardly of the vehicle is ensured.

Further, the apparent area of the second light emission surface of the left position lamp being larger than the apparent area of the first light emission surface in the left side view of the vehicle means that conspicuousness of the left position lamp is improved in the case where the vehicle is viewed from a position farther leftward than the vehicle. The apparent area of the second light emission surface of the right position lamp being larger than the apparent area of the first light emission surface in the right side view of the vehicle means that conspicuousness of the right position lamp is improved in the case where the vehicle is viewed from a position farther rightward than the vehicle.

Therefore, the size of the front part of the vehicle can be reduced in the front-and-rear direction, and conspicuousness of the vehicle can be improved.

In the left side view of the vehicle, a minimum distance between the first light emission surface and the second light emission surface of the left position lamp in the direction orthogonal to the central axis of the head pipe may be larger than a maximum width of the second light emission surface of the left position lamp in the direction orthogonal to the central axis of the head pipe, and in the right side view of the vehicle, a minimum distance between the first light emission surface and the second light emission surface of the right position lamp in the direction orthogonal to the central axis of the head pipe may be larger than a maximum width of the second light emission surface of the right position lamp in the direction orthogonal to the central axis of the head pipe.

In this case, the headlamp and the left position lamp are easily identified in the left side view of the vehicle, and the headlamp and the right position lamp are easily identified in the right side view of the vehicle.

In the left side view of the vehicle, a maximum width of the second light emission surface of the left position lamp in a direction orthogonal to a central axis of the head pipe may be larger than a maximum width of the first light emission surface in the direction orthogonal to the central axis of the head pipe, and in the right side view of the vehicle, a maximum width of the second light emission surface of the right position lamp in the direction orthogonal to the central axis of the head pipe may be larger than a maximum width of the first light emission surface in the direction orthogonal to the central axis of the head pipe.

In this case, conspicuousness of the left position lamp in the left side view of the vehicle is more sufficiently improved, and conspicuousness of the right position lamp in the right side view of the vehicle is more sufficiently improved.

In the front view of the vehicle, a maximum width of the first light emission surface in the vehicle left-and-right direction may be larger than a maximum width of each second light emission surface in the vehicle left-and-right direction.

In this case, the headlamp can stand out more sufficiently than the position lamps in the front view of the vehicle. Further, light can be emitted from the headlamp to a wide area farther forward than the vehicle.

The front cover further may have a rear surface portion arranged rearwardly of the head pipe in the vehicle front-and-rear direction, a rear edge of the rear surface portion in the side view of the vehicle may extend along a second virtual line that is in parallel with the central axis of the head pipe in the side view of the vehicle at a position farther rearward than the head pipe, and the front surface portion and the rear surface portion may be opposite to each other with the head pipe sandwiched therebetween in the side view of the vehicle.

In this case, the rear surface portion of the front cover has an outer shape that is substantially in parallel with the central axis of the head pipe and substantially flat in the side view of the vehicle, so that the size of the front cover in the front-and-rear direction can be reduced. Further, the flat front cover that is made compact in the front-and-rear direction is realized.

The front surface portion may include a pair of left and right inner portions respectively located between the first light emission surface and the second light emission surface of the left position lamp, and between the first light emission surface and the second light emission surface of the right position lamp, in the front view of the vehicle, and a pair of left and right outer portions respectively located at a position farther leftward than the second light emission surface of the left position lamp and a position farther rightward than the second light emission surface of the right position lamp in the front view of the vehicle, and in a horizontal cross section of a front part of the vehicle that passes through the pair of inner portions and the pair of outer portions, the second light emission surface of the left position lamp may be at least partially located at a position farther forward than a front end of the left outer portion, and the second light emission surface of the right position lamp is at least partially located forwardly of a front end of the right outer portion.

In this case, a portion, located at a position farther forward than the front end of the left outer portion, of the second light emission surface of the left position lamp is exposed leftwardly of the vehicle. Therefore, conspicuousness of the left position lamp in the case where the vehicle is viewed from a position obliquely farther forward and leftward than the vehicle or a position farther leftward than the vehicle is further improved. Further, a portion, located at a position farther forward than the front end of the right outer portion, of the second light emission surface of the right position lamp is exposed rightwardly of the vehicle. Therefore, conspicuousness of the right position lamp in the case where the vehicle is viewed from a position obliquely farther rightward and forward than the vehicle or a position farther rightward than the vehicle is more sufficiently improved.

The straddled vehicle may further include a front fork supported at the head pipe to be rotatable about a central axis of the head pipe, and the front cover may be supported at the head pipe independently from the front fork such that the front fork is rotatable relative to the front cover.

In this case, during an operation of the handle by the rider, the first light emission surface of the headlamp and the second light emission surface of each position lamp do not rotate about a central axis of the head pipe. Therefore, a change in conspicuousness of the headlamp and the pair of position lamps during turning of the vehicle is inhibited.

Each of the pair of position lamps may further have a light source, and a light guide that emits light, generated by the light source, outwardly of the vehicle through the second light emission surface, and the light guide may be formed to extend in the top-and-bottom direction in the front view of the vehicle.

In the case where the light generated by the light source is emitted through the light guide, intensity of emittable light is reduced as compared to the case where the light generated by the light source is emitted without passing through the light guide. Even in such a case, conspicuousness of the left position lamp in the case where the vehicle is viewed from a position farther leftward than the vehicle, and conspicuousness of the right position lamp in the case where the vehicle is viewed from a position farther rightward than the vehicle are respectively improved. Thus, high conspicuousness of the vehicle in the case where the pair of position lamps are lit is ensured. Further, in the above-mentioned configuration, light can be emitted from the second light emission surface that extends in the top-and-bottom direction with a simple configuration.

The light source may be provided such that light is incident on an upper end of the light guide. In this case, the light source can be arranged above the light guide. Thus, the size of the position lamps in the vehicle front-and-rear direction can be made compact.

### BRIEF DESCRIPTION OF THE SEVERAL VIEWS OF THE DRAWING

Fig. 1 is a side view of a motorcycle according to one preferred embodiment;
Fig. 2 is a perspective view showing the appearance of a head pipe and a body frame included in the motorcycle of Fig. 1;
Fig. 3 is a plan view of the motorcycle of Fig. 1;
Fig. 4 is a front view of the motorcycle of Fig. 1;
Fig. 5 is a front view of a front cover of Fig. 1;
Fig. 6 is a schematic side view of a headlamp of Fig. 5;
Fig. 7 is a schematic side view of a left position lamp of Fig. 5;
Fig. 8 is a perspective view showing the appearance of the front cover as viewed in a direction that is inclined by 45 degrees with respect to a vertical plane extending in a front-and-rear direction from a position obliquely farther leftward and forward than the vehicle;
Fig. 9 is a perspective view showing the appearance of the front cover as viewed in a direction that is inclined by 45 degrees with respect to the vertical plane extending in the front-and-rear direction from a position obliquely farther rightward and forward than the vehicle;
Fig. 10 is a side view of the front cover when the front cover is viewed from a position farther leftward than the motorcycle;
Fig. 11 is a side view of the front cover when the front cover is viewed from a position farther rightward than the motorcycle; and
Fig. 12 is a cross sectional view of a front surface portion of the front cover, the headlamp and a position lamp cut along a horizontal plane including the line Q-Q of Fig. 5.

### DESCRIPTION OF THE PREFERRED EMBODIMENTS

A straddled vehicle according to one preferred embodiment will be described below with reference to the drawings. In the following description, a motorcycle is described as one example of the straddled vehicle.

### [1] Schematic Configuration of Motorcycle

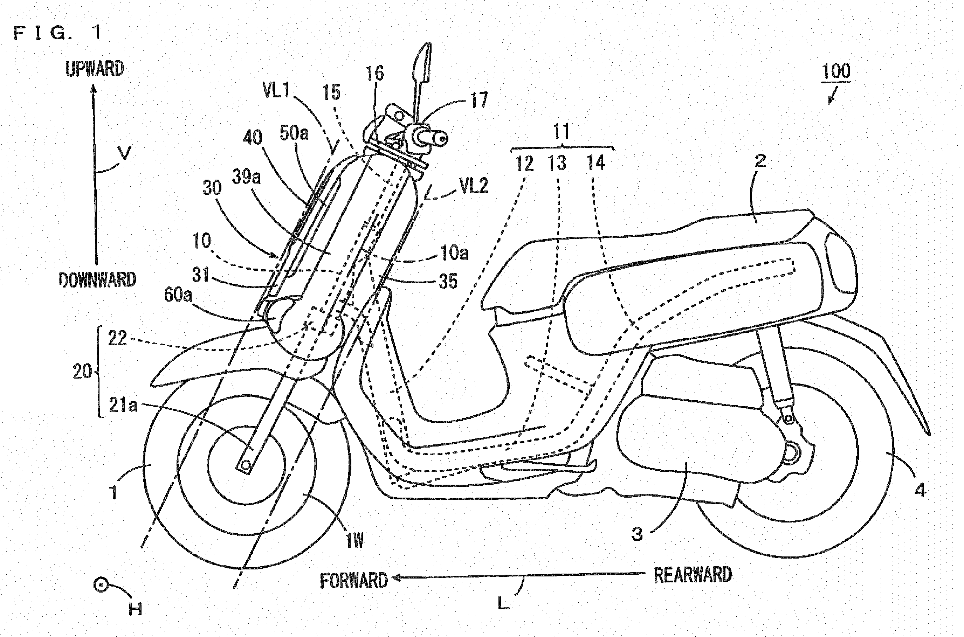

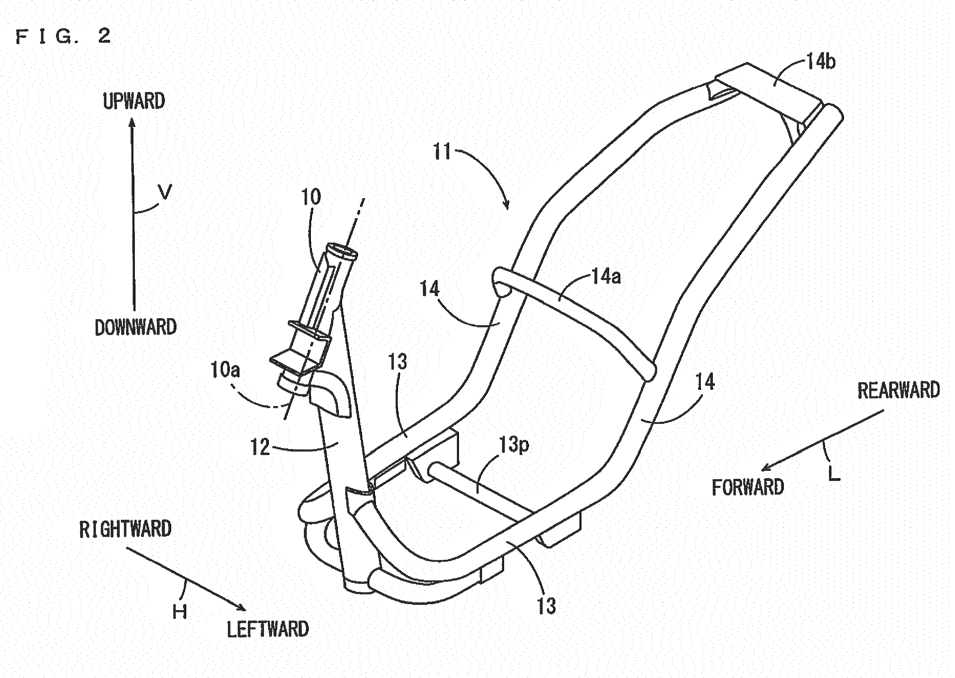

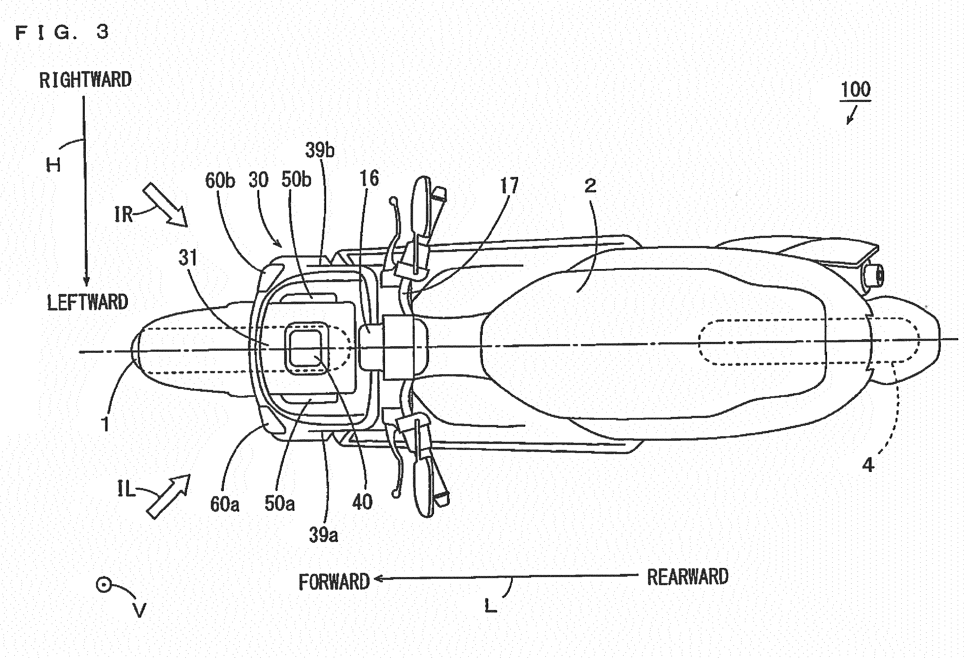

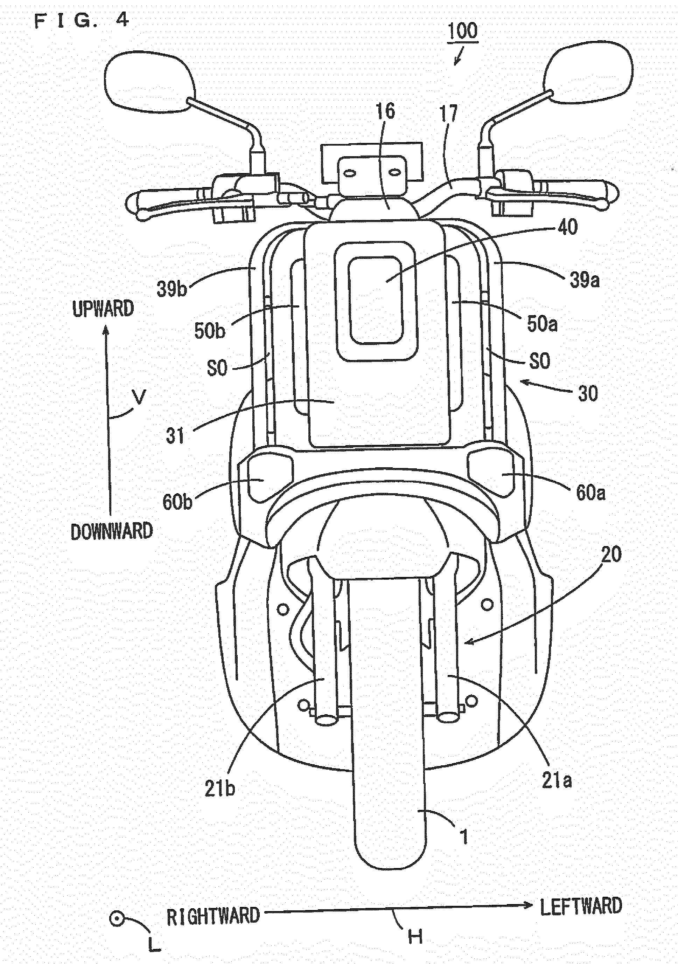

Fig. 1 is a side view of the motorcycle according to the one preferred embodiment, and Fig. 2 is a perspective view showing the appearance of a head pipe and a body frame included in the motorcycle 100 of Fig. 1. Fig. 3 is a plan view of the motorcycle 100 of Fig. 1, and Fig. 4 is a front view of the motorcycle 100 of Fig. 1.

In Figs. 1, 3 and 4, the motorcycle 100 is shown standing up to be perpendicular to a road surface. In each of Fig. 1 and subsequent given diagrams, a front-and-rear direction L, a left-and-right direction H and a top-and-bottom direction V of the motorcycle 100 are suitably indicated by arrows. In the following description, a direction in which the arrow is directed in the front-and-rear direction L is referred to as forward, and its opposite direction is referred to as rearward. Further, a direction in which the arrow is directed in the left-and-right direction H is referred to as leftward, and its opposite direction is referred to as rightward. A direction in which the arrow is directed in the top-and-bottom direction V is referred to as upward, and its opposite direction is referred to as downward.

As shown in Fig. 1, the motorcycle 100 includes a head pipe 10 and a body frame 11. As shown in Fig. 2, the body frame 11 mainly includes one down frame 12, a pair of left and right first rear frames 13 and a pair of left and right second rear frames 14. The head pipe 10 is provided to pass through the center of the motorcycle 100 in the left-and-right direction H and extend obliquely, downwardly and forwardly in a vertical plane extending in the front-and-rear direction L. The one down frame 12 is provided to extend obliquely downwardly and rearwardly from a substantially center portion of the head pipe 10. In this manner, in the present embodiment, only the one down frame 12 is joined to the head pipe 10 as the body frame 11.

The left and right first rear frames 13 are curved while spreading in the left-and-right direction H from a position in the vicinity of the lower end of the down frame 12 and extends rearwardly. A pivot shaft 13p extending in the left-and-right direction H is provided at the lower ends of the rear ends of the left and right first rear frames 13. The left and right second rear frames 14 extend respectively, obliquely, upwardly and rearwardly from the rear ends of the left and right first rear frames 13. Respective two connection pieces 14a, 14b are provided to connect center portions of the left and right second rear frames 14 to each other and connect the rear ends of the left and right second rear frames 14 to each other.

As shown in Fig. 1, a steering shaft 15 and a front fork 20 are supported at the head pipe 10 to be rotatable about a central axis 10a of the head pipe 10. Specifically, a steering shaft 15 is inserted into the head pipe 10. The steering shaft 15 extends in a direction of the central axis 10a of the head pipe 10 from a position farther downward than the head pipe 10 to a position farther upward than the head pipe 10. A handle 17 is attached to an upper end of the steering shaft 15 via a handlebar stem 16.

The front fork 20 is mainly constituted by a pair of left and right fork tubes 21a, 21b (Fig. 4) and an under bracket 22. The under bracket 22 is connected to the lower end of the steering shaft 15 at a position below the head pipe 10 and couples the upper ends of the left and right fork tubes 21a, 21b to each other. The front wheel 1 is rotatably attached to the lower ends of the pair of fork tubes 21a, 21b. The front wheel 1 includes a wheel member 1W and a tire.

A front cover 30 is further supported at the head pipe 10 independently from the steering shaft 15 and the front fork 20. Thus, the front fork 20 is rotatable relative to the front cover 30. The front cover 30 has a front surface portion 31, a rear surface portion 35 and a pair of left and right side surface portions 39a, 39b (Figs. 3 and 4).

The front surface portion 31 is arranged forwardly of the head pipe 10 in the front-and-rear direction L. A front edge of the front surface portion 31 in a side view of the vehicle extends along a first virtual line VL1 that is in parallel with the central axis 10a of the head pipe 10 in the side view of the vehicle at a position farther forward than the head pipe 10. Here, the front edge of the front surface portion 31 in the side view of the vehicle partially forms a contour of the front surface portion 31 when the front surface portion 31 is viewed from a position farther leftward or rightward than the motorcycle 100. Further, the above expression "the front edge of the front surface portion 31 in the side view of the vehicle extends along the first virtual line VL1" means that the front edge of the front surface portion 31 in the side view of the vehicle is not spaced apart from the first virtual line VL1 by a distance larger than a certain distance (10 cm, for example) in the side view of the vehicle, and that the front edge of the front surface portion 31 in the side view of the vehicle extends in parallel with a direction of the first virtual line VL1 or extends substantially in parallel with the first virtual line VL1 without inclining by an angle equal to or larger than a certain angle (15°, for example) with respect to the first virtual line VL1. As shown in Fig. 1, the first virtual line VL1 intersects with the wheel member 1W of the front wheel 1 in the side view of the vehicle.

The rear surface portion 35 is arranged rearwardly of the head pipe 10 in the front-and-rear direction L. A rear edge of the rear surface portion 35 in the side view of the vehicle extends along a second virtual line VL2 that is in parallel with the central axis 10a of the head pipe 10 in the side view of the vehicle at a position farther rearward than the head pipe 10. Here, the rear edge of the rear surface portion 35 in the side view of the vehicle partially forms a contour of the rear surface portion 35 when the front surface portion 31 is viewed from a position farther leftward or rightward than the motorcycle 100. Further, the above expression "the rear edge of the rear surface portion 35 in the side view of the vehicle extends along the second virtual line VL2" means that the rear edge of the rear surface portion 35 in the side view of the vehicle is not spaced apart from the second virtual line VL2 by a distance larger than a certain distance (10 cm, for example) in the side view of the vehicle, and that the rear edge of the rear surface portion 35 in the side view of the vehicle extends in parallel with a direction of the second virtual line VL2 or extends substantially in parallel with the second virtual line VL2 without inclining by an angle equal to or larger than a certain angle (15°, for example) with respect to the second virtual line VL2. As shown in Fig. 1, the second virtual line VL2 intersects with the wheel member 1W of the front wheel 1 in the side view of the vehicle.

The front surface portion 31 and the rear surface portion 35 are opposite to each other with the head pipe 10 interposed therebetween. The left side surface portion 39a is arranged leftwardly of the head pipe 10, and connects a left side edge of the front surface portion 31 to a left side edge of the rear surface portion 35. The right side surface portion 39a (Figs. 3 and 4) is arranged rightwardly of the head pipe 10, and connects a right side edge of the front surface portion 31 to a right side edge of the rear surface portion 35. As shown in Fig. 4, a slit opening SO is formed in each of the left and right side surface portions 39a, 39b. The slit opening SO penetrates the front cover 30 in the front-and-rear direction L. Further, the slit opening SO extends in the top-and-bottom direction V in the front view of the vehicle.

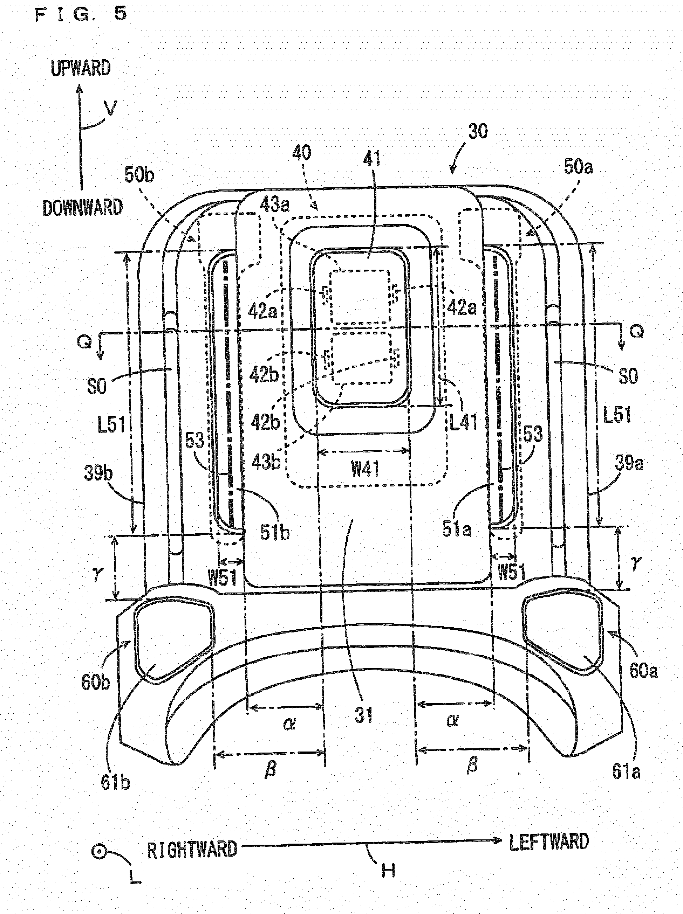

As shown in Figs. 3 and 4, a headlamp 40, a pair of left and right position lamps 50a, 50b and a pair of left and right flasher lamps 60a, 60b are provided at the front cover 30. The headlamp 40, the left and right position lamps 50a, 50b and left and right flasher lamps 60a, 60b respectively have light emission surfaces 41, 51a, 51b, 61a, 61b (see Fig. 5, described below) that emit light at least forwardly of the motorcycle 100. Details of the front cover 30, the headlamp 40, the position lamps 50a, 50b and the flasher lamps 60a, 60b are described below.

As shown in Fig. 1, a seat 2 is provided at a position spaced apart rearwardly from the front cover 30 by a certain distance. The seat 2 extends in the front-and-rear direction L from a substantially central upper portion of the motorcycle 100 to the rear end of the vehicle. Further, the seat 2 is supported by the left and right second rear frames 14 of Fig. 2.

An engine 3 is provided below the seat 2 and the left and right second rear frames 14. The engine 3 is a unit-swing type engine and supported at the body frame 11 via the pivot shaft 13p of Fig. 2. In this state, the engine 3 is swingable in the top-and-bottom direction V with the pivot shaft 13p as a center. A rear wheel 4 is rotatably attached to the rear end of the engine 3. The rear wheel 4 is rotated by motive power generated by the engine 3.

### [2] Configuration of Front Cover and Each Lamp

Fig. 5 is a front view of the front cover 30 of Fig. 1. As shown in Fig. 5, in the front surface portion 31, the light emission surface 41 of the headlamp 40 is provided to be located at substantially the center of the front cover 30 in the left-and-right direction H. The light emission surface 41 has a substantially rectangular shape extending in the top-and-bottom direction V in the front view of the vehicle. A length L41 of the light emission surface 41 in the top-and-bottom direction V in the front view of the vehicle is about two times of a maximum width W41 of the light emission surface 41 in the left-and-right direction H. Two upper light sources 42a, an upper reflector 43a, two lower light sources 42b and a lower reflector 43b are provided inside of the head lamp 40. The details of the inner configuration of the headlamp 40 will be described below.

Further, in the front surface portion 31, the light emission surface 51a of the left position lamp 50a is provided leftwardly of the light emission surface 41 of the headlamp 40 at a position spaced apart from the light emission surface 41 in the front view of the vehicle. The light emission surface 51a of the left position lamp 50a is located between the light emission surface 41 of the headlamp 40 and the left side surface portion 39a in the front view of the vehicle. Further, the light emission surface 51b of the right position lamp 50b is provided rightwardly of the light emission surface 41 of the headlamp 40 at a position spaced apart from the light emission surface 41 in the front view of the vehicle. The light emission surface 51b of the right position lamp 50b is located between the light emission surface 41 of the headlamp 40 and the right side surface portion 39b in the front view of the vehicle.

The left and right position lamps 50a, 50b are configured to be symmetrical with each other with respect to a vertical plane that passes through the center of the motorcycle 100 in the left-and-right direction H and extending in the front-and-rear direction L. Each of the light emission surfaces 51a, 51b has a strip shape extending in the top-and-bottom direction V in the front view of the vehicle. Thus, a length L51 of each of the light emission surfaces 51a, 51b in the top-and-bottom direction V in the front view of the vehicle is much larger than a maximum width W51 of each of the light emission surfaces 51a, 51b in the left-and-right direction H. Further, the length L51 of each of the light emission surfaces 51a, 51b in the top-and-bottom direction V in the front view of the vehicle is larger than the length L41 of the light emission surface 41 of the headlamp 40 in the top-and-bottom direction V in the front view of the vehicle. The upper ends of the light emission surfaces 51a, 51b are at substantially the same positions (height) as the upper end of the light emission surface 41 in the top-and-bottom direction V. On the other hand, the lower ends of the light emission surfaces 51a, 51b are located at positions farther downward than the lower end of the light emission surface 41 in the top-and-bottom direction V.

As indicated by thick one-dot and dash lines in Fig. 5, a light guide 53 formed to extend in the top-and-bottom direction V in the front view of the vehicle is provided inside of each of the position lamps 50a, 50b. As for each of the position lamps 50a, 50b, details of the inner configuration including the light guide 53 will be described below.

Further, in the front surface portion 31, the light emission surface 61a of the left flasher lamp 60a is provided at a position farther downward and leftward than the light emission surface 51a of the left position lamp 50a. The light emission surfaces 51a, 61a are spaced apart from each other. A distance β between the light emission surface 41 and the left light emission surface 61a in the left-and-right direction H is larger than a distance α between the light emission surface 41 and the left light emission surface 51a in the left-and-right direction H. Further, a distance γ between the left light emission surface 51a and the left light emission surface 61a in the top-and-bottom direction V is several centimeters, for example.

Further, in the front surface portion 31, the light emission surface 61b of the right flasher lamp 60b is provided at a position farther downward and rightward than the light emission surface 51b of the right position lamp 50b. The light emission surfaces 51b, 61b are spaced apart from each other. The left and right flasher lamps 60a, 60b are configured to be symmetrical with each other with respect to a vertical plane passing through the center of the vehicle. Therefore, similarly to the arrangement of each light emission surface in the left part of the front cover 30, a distance β between the light emission surface 41 and the right light emission surface 61b in the left-and-right direction H is larger than a distance α between the light emission surface 41 and the right light emission surface 51 b in the left-and-right direction H. Further, a distance γ between the right light emission surface 51b and the right light emission surface 61b in the top-and-bottom direction V is about several centimeters, for example.

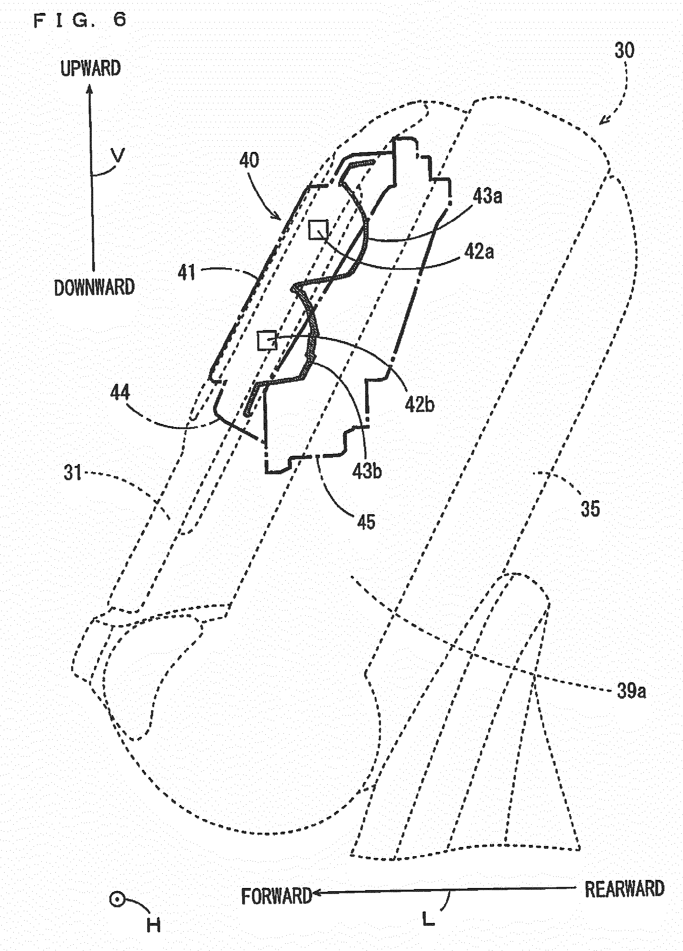

Fig. 6 is a schematic side view of the headlamp 40 of Fig. 5. Fig. 6 shows an outer shape of the head lamp 40 as viewed from a position farther leftward than the motorcycle 100. Further, part of the inner configuration of the headlamp 40 is shown in a longitudinal cross sectional view in parallel with the front-and-rear direction L. Further, an outer shape of the front cover 30 is indicated by dotted lines.

As shown in Fig. 5 and 6, the headlamp 40 includes two upper light sources 42a, two lower light sources 42b, an upper reflector 43a, a lower reflector 43b, a lens 44 and a casing 45. In Fig. 6, only a right upper light source 42a of the two upper light sources 42a and only a right lower light source 42b of the two lower light sources 42b are shown. Each of the two upper light sources 42a and the two lower light sources 42b is one or a plurality of LEDs (Light Emitting Diodes), for example. As shown in Fig. 5, the two upper light sources 42a are respectively attached to both of the left and right sides of the upper reflector 43a. Further, the two lower light sources 42b are respectively attached to both of the left and right sides of the lower reflector 43b. A halogen lamp may be used as an upper light source 42a and a lower light source 42b.

The upper reflector 43a and the lower reflector 43b are stored in the casing 45 to be arranged in the top-and-bottom direction V in the front view of the vehicle (Fig. 5) and arranged in parallel with the front surface portion 31 of the front cover 30 in the side view of the vehicle. The lens 44 is attached to the front end of the casing 45.

An opening corresponding to the lens 44 is formed in the front surface portion 31 of the front cover 30. A portion of the lens 44 exposed forwardly of the front surface portion 31 from the opening formed in the front surface portion 31 is equivalent to the light emission surface 41 of the headlamp 40.

In the motorcycle 100 according to the present embodiment, a rider can switch a lit state of the headlamp 40 between a low-beam mode and a high-beam mode by operating an operation portion (not shown).

In the low-beam mode, light is generated by the two upper light sources 42a, and light is not generated by the two lower light sources 42b. The light generated by the two upper light sources 42a is reflected by the upper reflector 43a and is emitted forwardly and downwardly of the motorcycle 100 from an upper half portion of the light emission surface 41 as a low beam.

In the high beam mode, light is generated by the two upper light sources 42a and the two lower light sources 42b. The light generated by each of the two upper light sources 42a and the two lower light sources 42b is reflected by each of the upper reflector 43a and the lower reflector 43b, and is emitted forwardly of the motorcycle 100 from the entire light emission surface 41 as a high beam.

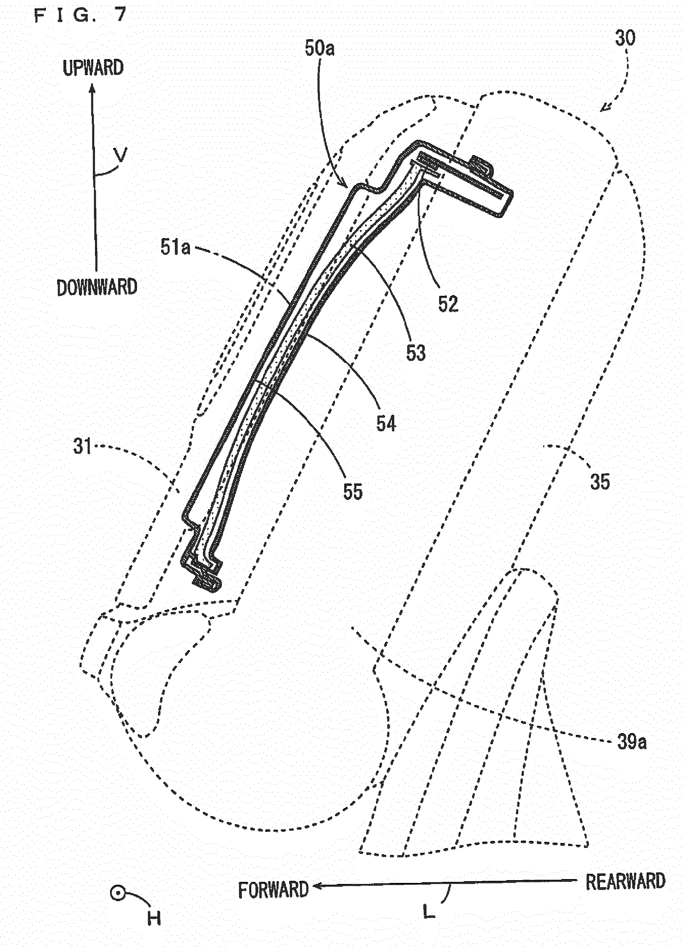

Fig. 7 is a schematic side view of the left position lamp 50a of Fig. 5. In Fig. 7, part of the inner configuration of the left position lamp 50a is shown in a longitudinal cross sectional view in parallel with the front-and-rear direction L. Further, an outer shape of the front cover 30 is indicated by dotted lines.

As shown in Fig. 7, the position lamp 50a includes a light source 52, a light guide 53, a reflector 54 and a lens 55. The light source 52 is one or a plurality of LEDs, for example. A halogen lamp may be used as the light source 52. The light guide 53 extends in the top-and-bottom direction V in the front view of the vehicle (see the thick one-dot and dash lines of Fig. 5), and extends substantially in parallel with the front edge of the front surface portion 31 of the front cover 30 in the side view of the vehicle. Further, the light guide 53 is curved gently to bulge forwardly in the side view of the vehicle from the lower end towards the upper end.

The light source 52 is arranged above the light guide 53 such that light is incident on the upper end of the light guide 53. The reflector 54 is arranged rearwardly of the light guide 53 such that the light emitted rearwardly of the vehicle from the light guide 53 is reflected forwardly of the vehicle. In this state, the reflector 54 supports the light guide 53 and the light source 52. The lens 55 is attached to the reflector 54. Thus, the light guide 53 and the light source 52 are stored in a sealed space formed of the reflector 54 and the lens 55.

An opening corresponding to the lens 55 is formed in the front surface portion 31 of the front cover 30. A portion of the lens 55 exposed forwardly of the front surface portion 31 from the opening formed in the front surface portion 31 is equivalent to the light emission surface 51a of the left position lamp 50a. The inner configuration of the right position lamp 50b is basically the same as the inner configuration of the left position lamp 50a.

When the left and right position lamps 50a, 50b are lit, the light generated by the light source 52 is incident on the upper end of the light guide 53, so that light is emitted from the entire light guide 53 in each of the position lamps 50a, 50b. Part of the light emitted from the light guide 53, and another part of the light emitted from the light guide 53 and reflected by the reflector 54 are transmitted through the lens 55 and emitted forwardly of the motorcycle 100 from the light emission surfaces 51a, 51b.

As described above, in the left and right position lamps 50a, 50b, the light source 52 is arranged above the light guide 53 such that the light emitted by the light source 52 is incident on the upper end of the light guide 53. Thus, the size of the position lamps 50a, 50b in the front-and-rear direction L can be made compact.

### [3] Conspicuousness of Motorcycle

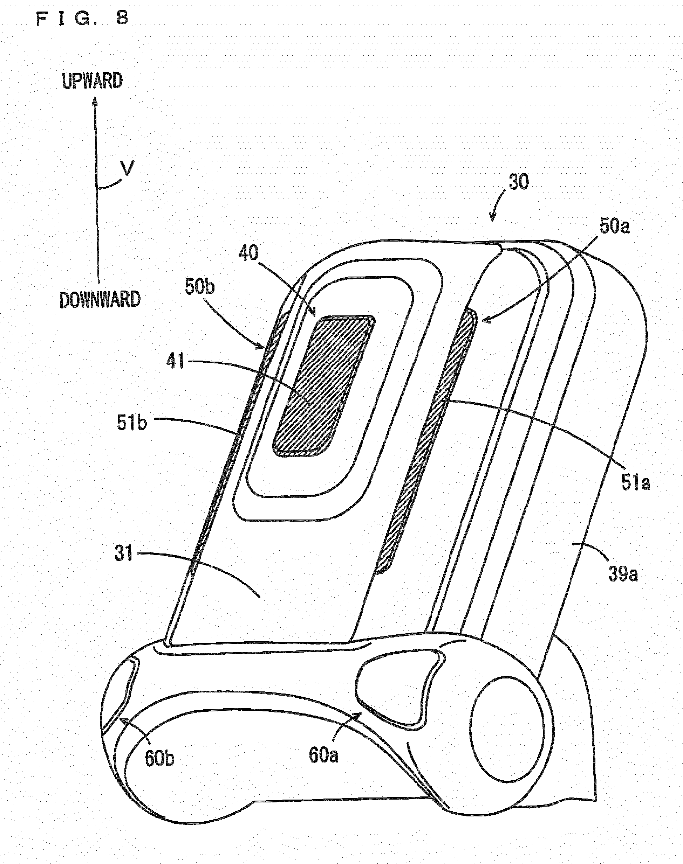

Fig. 8 is a perspective view showing the appearance of the front cover 30 as viewed in a direction that is inclined by 45 degrees with respect to a vertical plane extending in the front-and-rear direction L from a position obliquely farther leftward and forward than the vehicle. In Fig. 8, hatching is applied to the light emission surfaces 41, 51a, 51b in order to facilitate understanding of the shapes of the light emission surfaces 41, 51a, 51b of the headlamp 40 and the left and right position lamps 50a, 50b.

In the following description, a direction, of a line of sight in the case where the motorcycle 100 is viewed in a direction that is inclined by 45 degrees with respect to the vertical plane extending in the front-and-rear direction L from a position obliquely farther forward and leftward than the vehicle, is referred to as a left inclination direction IL. In Fig. 3, the vertical plane that passes through the center of the motorcycle 100 in the left-and-right direction H and extends in the front-and-rear direction L is indicated by a one-dot and dash line, and the left inclination direction IL is indicated by an outlined arrow.

As shown in Fig. 8, in the case where the front cover 30 is viewed in the left inclination direction IL, an apparent area of the light emission surface 41 of the headlamp 40 is larger than an apparent area of each of the light emission surfaces 51a, 51 b of the left and right position lamps 50a, 50b.

As described above, the apparent area, of the light emission surface 41 in the case where the front cover 30 is viewed in the left inclination direction IL, being larger than the apparent area of each of the light emission surfaces 51a, 51b means that conspicuousness of the headlamp 40 in the case where the motorcycle 100 is viewed from a position farther forward than the motorcycle 100 or a position obliquely farther leftward and forward than the motorcycle 100 is ensured. That is, conspicuousness of the headlamp 40 is ensured.

Here, the apparent area of each of the light emission surfaces 41, 51a, 51b in the case where the front cover 30 is viewed in the left inclination direction IL is a projected area of each of the light emission surfaces 41, 51a, 51b in the left inclination direction IL. That is, the apparent area is equivalent to an area of shadow that is generated in the case where each of the light emission surfaces 41, 51a, 51b is projected in the left inclination direction IL onto a plane orthogonal to the left inclination direction IL.

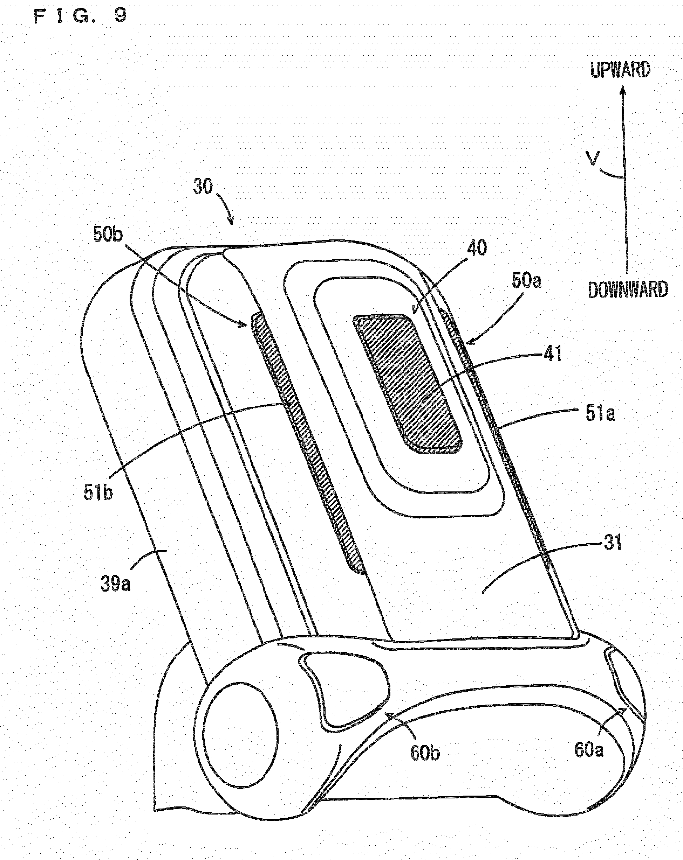

Fig. 9 is a perspective view showing the appearance of the front cover 30 as viewed in a direction that is inclined by 45 degrees with respect to a vertical plane extending in the front-and-rear direction L from a position obliquely farther rightward and forward than the vehicle. Also in Fig. 9, hatching is applied to the light emission surfaces 41, 51a, 51b similarly to the example of Fig. 8.

In the following description, a direction, of a line of sight in the case where the motorcycle 100 is viewed in a direction that is inclined by 45 degrees with respect to a vertical plane extending in the front-and-rear direction L from a position obliquely farther rightward and forward than the vehicle, is referred to as a right inclination direction IR. In Fig. 3, the right inclination direction IR is indicated by an outlined arrow.

As shown in Fig. 9, in the case where the front cover 30 is viewed in the right inclination direction IR, an apparent area of the light emission surface 41 of the headlamp 40 is larger than an apparent area of each of the light emission surfaces 51a, 51 b of the left and right position lamps 50a, 50b.

As described above, the apparent area, of the light emission surface 41 in the case where the front cover 30 is viewed in the right inclination direction IR, being larger than the apparent area of each of the light emission surfaces 51a, 51b means that conspicuousness of the headlamp 40 in the case where the motorcycle 100 is viewed from a position farther forward than the motorcycle 100 or a position obliquely farther rightward and forward than the motorcycle 100 is ensured. That is, conspicuousness of the headlamp 40 is ensured.

Here, the apparent area, of each of the light emission surfaces 41, 51a, 51b in the case where the front cover 30 is viewed in the right inclination direction IR, is a projected area of each of the light emission surfaces 41, 51a, 51b in the right inclination direction IR. That is, the apparent area is equivalent to an area of shadow that is generated in the case where each of the light emission surfaces 41, 51a, 51b is projected in the right inclination direction IR onto a plane orthogonal to the right inclination direction IR.

As for the conspicuousness of the headlamp 40, as shown in the above-mentioned Fig. 5, the maximum width W41 of the light emission surface 41 of the headlamp 40 in the left-and-right direction H in the front view of the vehicle is larger than the maximum width W51 of each of the light emission surfaces 51a, 51b of the position lamps 50a, 50b in the left-and-right direction H. Thus, the headlamp 40 can stand out more sufficiently than each of the position lamps 50a, 50b. Further, light can be emitted from the headlamp 40 to a wide area farther forward than the motorcycle 100.

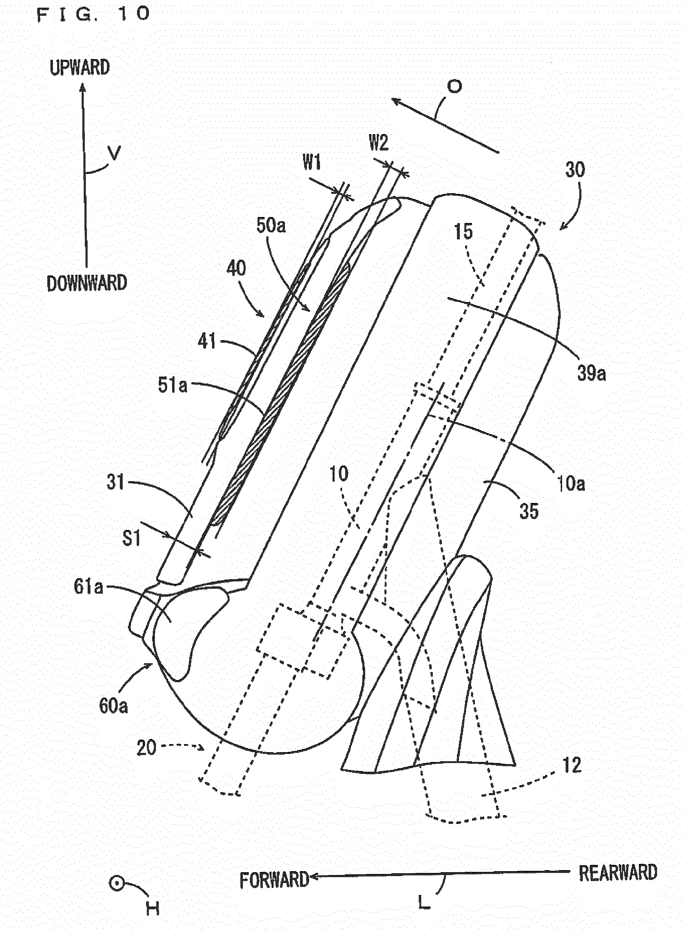

Fig. 10 is a side view of the front cover 30 when the front cover 30 is viewed from a position farther leftward than the motorcycle 100. In Fig. 10, hatching is applied to the light emission surfaces 41, 51a in order to facilitate understanding of the shapes of the light emission surfaces 41, 51a of the headlamp 40 and the left position lamp 50a.

As shown in Fig. 10, in the left side view of the vehicle in the case where the front cover 30 is viewed from a position farther leftward than the motorcycle 100, an apparent area of the light emission surface 51a of the left position lamp 50a is larger than an apparent area of the light emission surface 41 of the headlamp 40. In this manner, the apparent area of the light emission surface 51a being larger than the apparent area of the light emission surface 41 in the side view of the vehicle means that conspicuousness of the left position lamp 50a is improved in the case where the motorcycle 100 is viewed from a position farther leftward than the motorcycle 100.

A direction that is orthogonal to the central axis 10a of the head pipe 10 in the side view of the vehicle is referred to as an orthogonal direction O. In this case, as shown in Fig. 10, a maximum width W2 of the light emission surface 51a in the orthogonal direction O is larger than a maximum width W1 of the light emission surface 41 in the orthogonal direction O in the left side view of the vehicle. In this case, conspicuousness of the left position lamp 50a in the left side view of the vehicle is more sufficiently improved.

Further, as shown in Fig. 10, in the left side view of the vehicle, a minimum distance S1 between the light emission surface 41 and the light emission surface 51a in the orthogonal direction O is larger than the maximum width W2 of the light emission surface 51a in the orthogonal direction O. In this case, the headlamp 40 and the left position lamp 50a can be easily identified in the left side view of the vehicle.

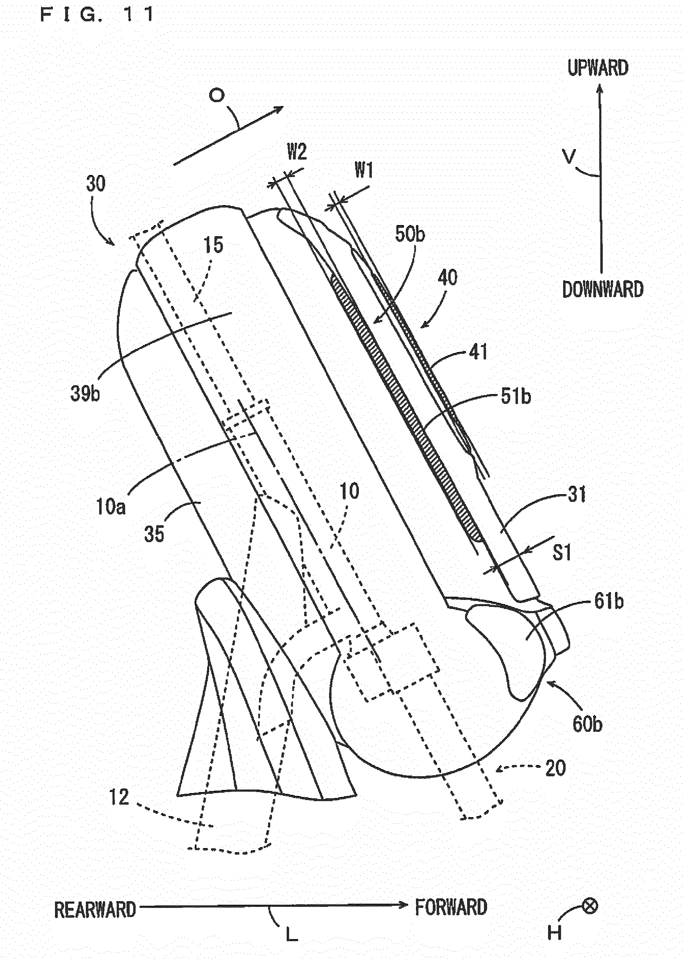

Fig. 11 is a side view of the front cover 30 as viewed from a position farther rightward than the motorcycle 100. In Fig. 11, hatching is applied to the light emission surfaces 41, 51b in order to facilitate understanding of the shapes of the light emission surfaces 41, 51b of the headlamp 40 and the right position lamp 50b.

As shown in Fig. 11, in the right side view of the vehicle in the case where the front cover 30 is viewed from a position farther rightward than the motorcycle 100, an apparent area of the light emission surface 51b of the right position lamp 50b is larger than an apparent area of the light emission surface 41 of the headlamp 40. In this manner, the apparent area of the light emission surface 51b being larger than the apparent area of the light emission surface 41 in the side view of the vehicle means that conspicuousness of the right position lamp 50b is improved in the case where the motorcycle 100 is viewed from a position farther rightward than the motorcycle 100.

As shown in Fig. 11, in the right side view of the motorcycle, the maximum width W2 of the light emission surface 51b in the orthogonal direction O is larger than the maximum width W1 of the light emission surface 41 in the orthogonal direction O. In this case, conspicuousness of the right position lamp 50b in the right side view of the vehicle is more sufficiently improved.

Further, as shown in Fig. 11, the minimum distance S1 between the light emission surface 41 and the right light emission surface 51b in the orthogonal direction O is larger than the maximum width W2 of the right light emission surface 51b in the orthogonal direction O in the right side view of the vehicle. In this case, the headlamp 4 and the light emission surface 51b of the right position lamp 50b can be easily identified in the right side view of the vehicle.

In the description of Figs. 10 and 11, the apparent area of each of the light emission surfaces 41, 51 a, 51 b in the left side view of the vehicle or the right side view of the vehicle is the projected area of each of the light emission surfaces 41, 51a, 51b in the left-and-right direction H. That is, the apparent area is equivalent to an area of shadow that is generated in the case where each of the light emission surfaces 41, 51a, 51b is projected in the left-and-right direction H onto a vertical plane that is orthogonal to the left-and-right direction H.

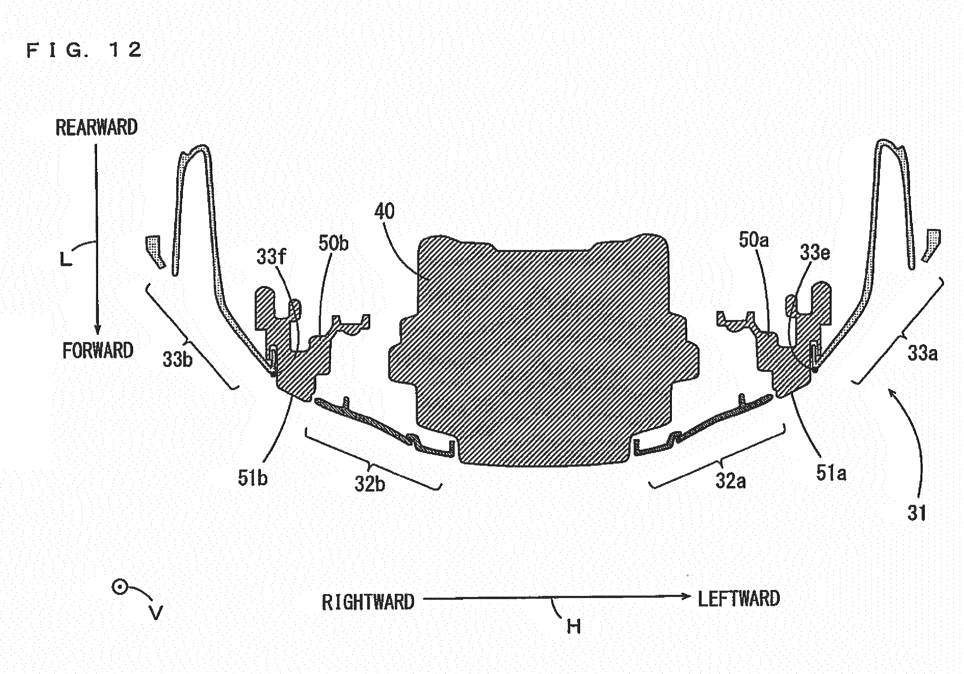

Fig. 12 is a cross sectional view of the front surface portion 31 of the front cover 30, the headlamp 40 and the position lamps 50a, 50b cut along a horizontal plane including the line Q-Q of Fig. 5. Here, a portion, located between the light emission surface 41 of the headlamp 40 and the light emission surface 51a of the left position lamp 50a in the left-and-right direction H of the front surface portion 31 of the front cover 30, is referred to as an inner portion 32a, and a portion, located at a position farther leftward than the light emission surface 51a in the left-and-right direction H of the front surface portion 31 of the front cover 30, is referred to as an outer portion 33a. Further, a portion, located between the light emission surface 41 of the headlamp 40 and the light emission surface 51b of the right position lamp 50b in the left-and-right direction H of the front surface portion 31 of the front cover 30, is referred to as an inner portion 32b, and a portion, located at a position farther rightward than the light emission surface 51b in the left-and-right direction H of the front surface portion 31 of the front cover 30, is referred to as an outer portion 33b. In Fig. 12, dense hatching is applied to the inner portions 32a, 32b, and a dotted pattern is applied to the outer portions 33a, 33b, in order to facilitate distinction between the inner portions 32a, 32b and the outer portions 33a, 33b.

As shown in Fig. 12, the left outer portion 33a extends obliquely, leftwardly and rearwardly from a position in the vicinity of the light emission surface 51a of the left position lamp 50a. A front end 33e of the left outer portion 33a is close to the adjacent left position lamp 50a. Further, the front end 33e of the left outer portion 33a is located at a position farther rearward than the rear end of the left inner portion 32a. Further, part of the light emission surface 51a of the left position lamp 50a is located at a position farther forward than the front end 33e of the left outer portion 33a.

In this case, a portion, located at a position farther forward than the front end 33e of the left outer portion 33a, of the left light emission surface 51a is exposed leftwardly of the motorcycle 100. Therefore, conspicuousness of the left position lamp 50a in the case where the motorcycle 100 is viewed from a position obliquely farther leftward and forward than the motorcycle 100 or a position farther leftward than the motorcycle 100 is more sufficiently improved.

As shown in Fig. 12, the right outer portion 33b extends obliquely, rightwardly and rearwardly from a position in the vicinity of the light emission surface 51b of the right position lamp 50b. A front end 33f of the right outer portion 33b is close to the adjacent right position lamp 50b. Further, the front end 33f of the right outer portion 33b is located at a position farther rearward than the rear end of the right inner portion 32b. Further, part of the light emission surface 51b of the right position lamp 50b is located at a position farther forward than the front end 33f of the right outer portion 33b.

In this case, a portion, located at a position farther forward than the front end 33f of the right outer portion 33b, of the right light emission surface 51b is exposed rightwardly of the motorcycle 100. Therefore, conspicuousness of the right position lamp 50a in the case where the motorcycle 100 is viewed from a position obliquely farther rightward and forward than the motorcycle 100 or a position farther rightward than the motorcycle 100 is more sufficiently improved.

### [4] Effects

(a) In the motorcycle 100 according to the present embodiment, the front surface portion 31 of the front cover 30 has an outer shape that is substantially in parallel with the central axis 10a of the head pipe 10 and substantially flat in the side view of the vehicle. Therefore, the size of the front cover 30 in the front-and-rear direction L can be reduced. Further, in the case where the front cover 30 is viewed in the left inclination direction IL or the right inclination direction IR, the apparent area of the light emission surface 41 of the headlamp 40 is larger than the apparent areas of the light emission surfaces 51a, 51b of the left and right position lamps 50a, 50b. Thus, conspicuousness of the headlamp 40 is ensured. Further, the apparent area of the light emission surface 51a of the left position lamp 50a is larger than the apparent area of the light emission surface 41 of the headlamp 40 in the left side view of the vehicle, and the apparent area of the light emission surface 51b of the right position lamp 50b is larger than the apparent area of the light emission surface 41 of the headlamp 40 in the right side view of the vehicle. Thus, conspicuousness of the left and right position lamps 50a, 50b is improved.
   As a result, the size of the front part of the motorcycle 100 can be reduced in the front-and-rear direction L, and conspicuousness of the motorcycle 100 can be improved. In the present embodiment, the front part of the motorcycle 100 refers to a part, located at a position farther forward than the seat 2, of the motorcycle 100.
(b) The rear surface portion 35 of the front cover 30 has an outer shape that is substantially in parallel with the central axis 10a of the head pipe 10 and substantially flat in the side view of the vehicle. Thus, the size of the front cover 30 in the front-and-rear direction L can be more sufficiently reduced. Further, the flat front cover 30 that has been made compact in the front-and-rear direction L is realized.
(c) The front cover 30 is supported at the head pipe 10 independently from the front fork 20. Thus, the headlamp 40 and the left and right position lamps 50a, 50b are not rotated during the operation of the handle 17 by the rider. Therefore, a change in conspicuousness of the headlamp 40 and the left and right position lamps 50a, 50b during turning of the vehicle is inhibited.
(d) Each of the left and right position lamps 50a, 50b is configured such that light generated by the light source 52 is emitted through the light guide 53. Therefore, intensity of emittable light is reduced as compared to the case where the light generated by the light source 52 is emitted without passing through the light guide 53. Even in such a case, conspicuousness of the left position lamp 50a in the case where the motorcycle 100 is viewed from a position farther leftward than the motorcycle 100 is improved. Further, conspicuousness of the right position lamp 50b in the case where the motorcycle 100 is viewed from a position farther rightward than the motorcycle 100 is improved. Thus, high conspicuousness of the motorcycle 100 during a period in which the left and right position lamps 50a, 50b are lit is ensured. Further, in the above-mentioned configuration, light can be emitted from the light emission surfaces 51a, 51b extending in the top-and-bottom direction V with a simple configuration.

### [5] Other Embodiments

(a) In the above-mentioned embodiment, the rear surface portion 35 of the front cover 30 extends such that the rear edge of the rear surface portion 35 in the side view of the vehicle extends along the second virtual line VL2 in the side view of the vehicle. However, the present teaching is not limited to this. The rear surface portion 35 of the front cover 30 may be formed such that the rear edge of the rear surface portion 35 does not extend along the second virtual line VL2 in the side view of the vehicle. That is, the rear surface portion 35 of the front cover 30 does not have to have a substantially flat outer shape in the side view of the vehicle.
(b) While only the one down frame 12 is joined to the head pipe 10 of the motorcycle 100 as the body frame 11 in the above-mentioned embodiment, the present teaching is not limited to this. For example, two or more than two frame members may be joined to the head pipe 10 as a body frame. In this case, a large-size body frame having high rigidity can be employed. Thus, the present teaching can be applied to a large-size straddled vehicle.
(c) While the front cover 30 is supported at the head pipe 10 in the above-mentioned embodiment, the front cover 30 may be supported at the front fork 20 or the body frame 11.
(d) While the headlamp 40 is rectangular in the front view of the vehicle in the above-mentioned embodiment, the present teaching is not limited to this. For example, the headlamp 40 may have a circular shape, an oval shape or a polygonal shape other than a triangle or a square, for example.
(e) While the above-mentioned embodiment is an example in which the present teaching is applied to the motorcycle, the present teaching is not limited to this. The present teaching may be applied to another vehicle such as a four-wheeled automobile, a motor tricycle or an ATV (All Terrain Vehicle).
(f) While each of the light emission surfaces 51a, 51b of the position lamps 50a, 50b is constituted by the lens 55 that transmits light emitted from the light source 52 through the light guide 53 in the above-mentioned embodiment, the present teaching is not limited to this. The light emission surfaces 51a, 51b may be constituted by light sources formed in a stripe shape. Further, a configuration in which a plurality of light sources are arranged in the top-and-bottom direction V in the front view of the vehicle may be used for a light emission surface of the present teaching.

### [6] Correspondences between Constituent Elements in Claims and Parts in Preferred Embodiments

In the following paragraphs, non-limiting examples of correspondences between various elements recited in the claims below and those described above with respect to various preferred embodiments are explained.

In the above-mentioned embodiment, the motorcycle 100 is an example of a straddled vehicle, the head pipe 10 is an example of a head pipe, the central axis 10a is an example of a central axis of a head pipe, the front cover 30 is an example of a front cover, the light emission surface 41 is an example of a first light emission surface, the headlamp 40 is an example of a headlamp, the light emission surfaces 51a, 51b are examples of a second light emission surface, and the left and right position lamps 50a, 50b are examples of a pair of left and right position lamps.

Further, the front surface portion 31 is an example of a front surface portion, the first virtual line VL1 is an example of a first virtual line, the rear surface portion 35 is an example of a rear surface portion, the second virtual line VL2 is an example of a second virtual line, the inner portions 32a, 32b are examples of a pair of inner portions, the outer portions 33a, 33b are examples of a pair of outer portions, the front ends 33e, 33f of the outer portions 33a, 33b are examples of front ends of a pair of outer portions, the front fork 20 is an example of a front fork, the light source 52 is an example of a light source, and the light guide 53 is an example of a light guide.

As each of constituent elements recited in the claims, various other elements having configurations or functions described in the claims can be also used.

## Claims

1. A straddled vehicle comprising:
a head pipe (10);
a front cover (30);
a headlamp (40) having a first light emission surface (41); and
a pair of left and right position lamps (50a,50b) respectively having second light emission surfaces (51a,51b), wherein
the front cover (30) has a front surface portion (31) arranged forwardly of the head pipe (10) in a vehicle front-and-rear direction (L),
a front edge of the front surface portion (31) in a side view of the vehicle extends along a first virtual line (VL1) that is in parallel with a central axis (10a) of the head pipe (10) in the side view of the vehicle at a position farther forward than the head pipe (10),
the first light emission surface (41) of the headlamp (40) is provided at the front surface portion (31) of the front cover (30),
the second light emission surface (51a) of the left position lamp (50a) is provided at the front surface portion (31) of the front cover (30) at a position farther leftward than the first light emission surface (41) in a vehicle left-and-right direction (H) and spaced apart from the first light emission surface (41) in a front view of the vehicle,
the second light emission surface (51b) of the right position lamp (50b) is provided at the front surface portion (31) of the front cover (30) at a position farther rightward than the first light emission surface (41) in the vehicle left-and-right direction (H) and spaced apart from the first light emission surface (41) in the front view of the vehicle,
each second light emission surface (51a,51b) extends in a vehicle top-and-bottom direction (V) in the front view of the vehicle, wherein each second light emission surface (51a,51b) is larger than the first light emission surface (41) in the vehicle top-and-bottom direction (V),
in the front view of the vehicle, a length (L51) of each second light emission surface (51a,51b) in the vehicle top-and-bottom direction (V) is larger than a width (W51) of each second light emission surface (51a,51b) in the vehicle left-and-right direction (H),
in the case where the front surface portion (31) is viewed in a direction that is inclined by 45 degrees with respect to a vertical plane extending in the vehicle front-and-rear direction (L) from a position obliquely farther leftward and forward than the vehicle, an apparent area of the first light emission surface (41) is larger than an apparent area of the second light emission surface (51a) of the left position lamp (50a),
in the case where the front surface portion (31) is viewed in a direction that is inclined by 45 degrees with respect to the vertical plane extending in the vehicle front-and-rear direction (L) from a position obliquely farther rightward and forward than the vehicle, an apparent area of the first light emission surface (41) is larger than an apparent area of the second light emission surface (51b) of the right position lamp (50b),
in a left side view of the vehicle, an apparent area of the second light emission surface (51 a) of the left position lamp (50a) is larger than an apparent area of the first light emission surface (41), and
in a right side view of the vehicle, an apparent area of the second light emission surface (51b) of the right position lamp (50b) is larger than an apparent area of the first light emission surface (41), **characterized in that** in the left side view of the vehicle, a minimum distance (S1) between the first light emission surface (41) and the second light emission surface (51a) of the left position lamp (50a) in the direction orthogonal (O) to the central axis (10a) of the head pipe (10) is larger than the maximum width (W2) of the second light emission surface (51a) of the left position lamp (50a) in the direction orthogonal (O) to the central axis (10a) of the head pipe (10), and
in the right side view of the vehicle, a minimum distance (S1) between the first light emission surface (41) and the second light emission surface (51b) of the right position lamp (50b) in the direction orthogonal (O) to the central axis (10a) of the head pipe (10) is larger than the maximum width (W2) of the second light emission surface (51 b) of the right position lamp (50b) in the direction orthogonal (O) to the central axis (10a) of the head pipe (10).

2. The straddled vehicle according to claim 1, **characterized in that** in the left side view of the vehicle, a maximum width (W2) of the second light emission surface (51a) of the left position lamp (50a) in a direction orthogonal (O) to the central axis (10a) of the head pipe (10) is larger than a maximum width (W1) of the first light emission surface (41) in the direction orthogonal (O) to the central axis (10a) of the head pipe (10), and
in the right side view of the vehicle, a maximum width (W2) of the second light emission surface (51 b) of the right position lamp (50b) in the direction orthogonal (O) to the central axis (10a) of the head pipe (10) is larger than a maximum width (W1) of the first light emission surface (41) in the direction orthogonal (O) to the central axis (10a) of the head pipe (10).

3. The straddled vehicle according to claim 1 or 2, **characterized in that** in the front view of the vehicle, a maximum width (W41) of the first light emission surface (41) in the vehicle left-and-right direction (H) is larger than a maximum width (W51) of each second light emission surface (51a,51b) in the vehicle left-and-right direction (H).

4. The straddled vehicle according to any one of claims 1 to 3, **characterized in that** the front cover (30) further has a rear surface portion (35) arranged rearwardly of the head pipe (10) in the vehicle front-and-rear direction (L),
a rear edge of the rear surface portion (35) in the side view of the vehicle extends along a second virtual line (VL2) that is in parallel with the central axis (10a) of the head pipe (10) in the side view of the vehicle at a position farther rearward than the head pipe (10), and the front surface portion (31) and the rear surface portion (35) are opposite to each other with the head pipe (10) sandwiched therebetween in the side view of the vehicle.

5. The straddled vehicle according to any one of claims 1 to 4, **characterized in that** the front surface portion (31) includes
a pair of left and right inner portions (32a,32b) respectively located between the first light emission surface (41) and the second light emission surface (51a) of the left position lamp (50a), and between the first light emission surface (41) and the second light emission surface (51b) of the right position lamp (50b), in the front view of the vehicle, and
a pair of left and right outer portions (33a,33b) respectively located at a position farther leftward than the second light emission surface (51a) of the left position lamp (50a) and a position farther rightward than the second light emission surface (51b) of the right position lamp (50b) in the vehicle left-and-right direction (H) in the front view of the vehicle, and in a horizontal cross section of a front part of the vehicle that passes through the pair of inner portions (32a,32b) and the pair of outer portions (33a,33b), the second light emission surface (51a) of the left position lamp (50a) is at least partially located at a position farther forward than a front end (33e) of the left outer portion (33a), and the second light emission surface (51b) of the right position lamp (50b) is at least partially located forwardly of a front end (33f) of the right outer portion (33b).

6. The straddled vehicle according to any one of claims 1 to 5, **characterized by** a front fork (20) supported at the head pipe (10) to be rotatable about the central axis (10a) of the head pipe (10), and
the front cover (30) is supported at the head pipe (10) independently from the front fork (20) such that the front fork (20) is rotatable relative to the front cover (30).

7. The straddled vehicle according to any one of claims 1 to 6, **characterized in that** each of the pair of position lamps (50a,50b) further has
a light source (52), and
a light guide (53) configured to emit light, generated by the light source (52), outwardly of the vehicle through the second light emission surface (51a,51b), and
the light guide (53) is formed to extend in the vehicle top-and-bottom direction (V) in the front view of the vehicle.

8. The straddled vehicle according to claim 7, **characterized in that** the light source (52) is arranged such that light is incident on an upper end of the light guide (53).

## Patentansprüche

1. Ein Spreiz-Sitz-Fahrzeug, das umfasst:
ein Kopf-Rohr (10);
eine Vorder-Abdeckung (30);
eine Scheinwerfer (40), der eine erste Licht-Austritts-Fläche (41) hat; und
einem Paar linker und rechter Positions-Leuchten (50a, 50b), die jeweils zweite Licht-Austritts-Flächen (51a, 51b) haben, wobei
die Vorder-Abdeckung (30) einen Vorder-Flächen-Abschnitt (31) hat, der vor dem Kopf-Rohr (10) in einer Fahrzeug-Vorder-und-Rück-Richtung (L) angeordnet ist,
eine Vorder-Kante des Vorder-Flächen-Abschnitts (31), in einer Seiten-Ansicht des Fahrzeugs, sich entlang einer ersten virtuellen Linie (VL1) erstreckt, die parallel zu einer Mittel-Achse (10a) des Kopf-Rohrs (10) in der Seiten-Ansicht des Fahrzeugs an einer Position weiter vorne als das Kopf-Rohr (10) ist,
die erste Licht-Austritts-Fläche (41) von dem Scheinwerfer (40) am Vorder-Flächen-Abschnitt (31) der Vorder-Abdeckung (30) vorgesehen ist,
die zweite Licht-Austritts-Fläche (51a) der linken Positions-Leuchte (50a) an dem Vorder-Flächen-Abschnitt (31) der Vorder-Abdeckung (30) an einer Position vorgesehen ist, weiter links als die erste Licht-Austritts-Fläche (41) in einer Fahrzeug-Links-und-Rechts-Richtung (H) und von der ersten Licht-Austritts-Fläche (41) beabstandet ist, in einer Vorder-Ansicht des Fahrzeugs,
die zweite Licht-Austritts-Fläche (51b) der rechten Positions-Leuchte (50b) an dem Vorder-Flächen-Abschnitt (31) der Vorder-Abdeckung (30) an einer Position vorgesehen ist, weiter rechts liegt als die erste Licht-Austritts-Fläche (41) in der Fahrzeug-Links-und-Rechts-Richtung (H) und von der ersten Licht-Austritts-Fläche (41) beabstandet ist, in der Vorder-Ansicht des Fahrzeugs,
jede zweite Licht-Austritts-Fläche (51a, 51b) sich in einer Fahrzeug-Oben-und-Unten-Richtung (V) in der Vorder-Ansicht des Fahrzeugs erstreckt, wobei jede zweite Licht-Austritts-Fläche (51a, 51b) größer ist als die erste Licht-Austritts-Fläche (41) in der Fahrzeug-Oben-und-Unten-Richtung (V),
in der Vorder-Ansicht des Fahrzeugs eine Länge (L51) jeder zweiten Licht-Austritts-Fläche (51a, 51b) in der Fahrzeug-Oben-und-Unten-Richtung (V) größer ist als eine Breite (W51) jeder zweiten Licht-Austritts-Fläche (51a, 51b) in der Fahrzeug-Links-und-Rechts-Richtung (H),
in dem Fall, in dem der Vorder-Flächen-Abschnitt (31) in einer Richtung betrachtet wird, die um 45 Grad in Bezug auf eine Vertikal-Ebene geneigt ist, die sich in der Fahrzeug-Vorder-und-Rück-Richtung (L) von einer Position aus erstreckt, die schräg weiter links und weiter vorne als das Fahrzeug liegt, ist ein sichtbarer Bereich der ersten Licht-Austritts-Fläche (41) größer als ein sichtbarer Bereich der zweiten Licht-Austritts-Fläche (51a) der linken Positions-Leuchte (50a),
in dem Fall, in dem der Vorder-Flächen-Abschnitt (31) in einer Richtung betrachtet wird, die um 45 Grad in Bezug auf eine Vertikal-Ebene geneigt ist, die sich in der Fahrzeug-Vorder-und-Rück-Richtung (L) von einer Position aus erstreckt, die schräg weiter rechts und weiter vorne als das Fahrzeug liegt, ist ein sichtbarer Bereich der ersten Licht-Austritts-Fläche (41) größer als ein sichtbarer Bereich der zweiten Licht-Austritts-Fläche (51b) der rechten Positions-Leuchte (50b),
in einer linken Seiten-Ansicht des Fahrzeugs ein scheinbarer Bereich der zweiten Licht-Austritts-Fläche (51a) der linken Positions-Leuchte (50a) größer ist als ein scheinbarer Bereich der ersten Licht-Austritts-Fläche (41), und
in einer rechten Seiten-Ansicht des Fahrzeugs ein scheinbarer Bereich der zweiten Licht-Austritts-Fläche (51b) der rechten Positions-Leuchte (50b) größer ist als ein scheinbarer Bereich der ersten Licht-Austritts-Fläche (41), **dadurch gekennzeichnet, dass**
in der linken Seiten-Ansicht des Fahrzeugs ein minimaler Abstand (S1) zwischen der ersten Licht-Austritts-Fläche (41) und der zweiten Licht-Austritts-Fläche (51a) der linken Positions-Leuchte (50a) in der Richtung orthogonal (O) zur Mittel-Achse (10a) des Kopf-Rohrs (10) größer ist als die maximale Breite (W2) der zweiten Licht-Austritts-Fläche (51a) der linken Positions-Leuchte (50a) in der Richtung orthogonal (O) zur Mittel-Achse (10a) des Kopf-Rohrs (10), und
in der rechten Seiten-Ansicht des Fahrzeugs ein minimaler Abstand (S1) zwischen der ersten Licht-Austritts-Fläche (41) und der zweiten Licht-Austritts-Fläche (51b) der rechten Positions-Leuchte (50b) in der Richtung orthogonal (O) zur Mittel-Achse (10a) des Kopf-Rohrs (10) größer ist als die maximale Breite (W2) der zweiten Licht-Austritts-Fläche (51b) der rechten Positions-Leuchte (50b) in der Richtung orthogonal (O) zur Mittel-Achse (10a) des Kopf-Rohrs (10).

2. Das Spreiz-Sitz-Fahrzeug gemäß Anspruch 1, **dadurch gekennzeichnet, dass** in der linken Seiten-Ansicht des Fahrzeugs eine maximale Breite (W2) der zweiten Licht-Austritts-Fläche (51a) der linken Positions-Leuchte (50a) in einer Richtung orthogonal (O) zur Mittel-Achse (10a) des Kopf-Rohrs (10) größer ist als eine maximale Breite (W1) der ersten Licht-Austritts-Fläche (41) in der Richtung orthogonal (O) zur Mittel-Achse (10a) des Kopf-Rohrs (10), und
in der rechten Seiten-Ansicht des Fahrzeugs eine maximale Breite (W2) der zweiten Licht-Austritts-Fläche (51b) der rechten Positions-Leuchte (50b) in der Richtung orthogonal (O) zur Mittel-Achse (10a) des Kopf-Rohrs (10) größer ist als eine maximale Breite (W1) der ersten Licht-Austritts-Fläche (41) in der Richtung orthogonal (O) zur Mittel-Achse (10a) des Kopf-Rohrs (10).

3. Das Spreiz-Sitz-Fahrzeug gemäß Anspruch 1 oder 2, **dadurch gekennzeichnet, dass** in der Vorder-Ansicht des Fahrzeugs eine maximale Breite (W41) der ersten Licht-Austritts-Fläche (41) in der Fahrzeug-Links-und-Rechts-Richtung (H) größer ist als eine maximale Breite (W51) jeder zweiten Licht-Austritts-Fläche (51a, 51b) in der Fahrzeug-Links-und-Rechts-Richtung (H).

4. Das Spreiz-Sitz-Fahrzeug gemäß irgendeinem der Ansprüche 1 bis 3, **dadurch gekennzeichnet, dass** die Vorder-Abdeckung (30) weiterhin einen Rück-Flächen-Abschnitt (35) aufweist, der in Fahrzeug-Vorder-und-Rück-Richtung (L) hinter dem Kopf-Rohr (10) angeordnet ist,
eine hintere Kante des Rück-Flächen-Abschnitts (35), in der Seiten-Ansicht des Fahrzeugs, sich entlang einer zweiten virtuellen Linie (VL2) erstreckt, die parallel zu der Mittel-Achse (10a) des Kopf-Rohrs (10) in der Seiten-Ansicht des Fahrzeugs an einer Position weiter hinten als das Kopf-Rohr (10) ist, und
der Vorder-Flächen-Abschnitt (31) und der Rück-Flächen-Abschnitt (35) einander gegenüberliegen, mit dem Kopf-Rohr (10) dazwischen angeordnet, in der Seiten-Ansicht des Fahrzeugs.

5. Das Spreiz-Sitz-Fahrzeug gemäß irgendeinem der Ansprüche 1 bis 4, **dadurch gekennzeichnet, dass** der Vorder-Flächen-Abschnitt (31) beinhaltet
ein Paar linker und rechter Innen-Abschnitte (32a, 32b), die jeweils zwischen der ersten Licht-Austritts-Fläche (41) und der zweiten Licht-Austritts-Fläche (51a) der linken Positions-Leuchte (50a) und zwischen der ersten Licht-Austritts-Fläche (41) und der zweiten Licht-Austritts-Fläche (51b) der rechten Positions-Leuchte (50b) in der Vorder-Ansicht des Fahrzeugs angeordnet sind, und
ein Paar linker und rechter Außen-Abschnitte (33a, 33b), die jeweils an einer Position weiter links als die zweite Licht-Austritts-Fläche (51a) der linken Positions-Leuchte (50a) und einer Position weiter rechts als die zweite Licht-Austritts-Fläche (51b) der rechten Positions-Leuchte (50b) in der Links-Rechts-Richtung (H) des Fahrzeugs in der Vorder-Ansicht des Fahrzeugs angeordnet sind, und
in einem Horizontal-Querschnitt eines Vorder-Teils des Fahrzeugs, der durch das Paar Innen-Abschnitte (32a, 32b) und das Paar Außen-Abschnitte (33a, 33b) verläuft, die zweite Licht-Austritts-Fläche (51a) der linken Positions-Leuchte (50a) zumindest teilweise an einer Position angeordnet ist, die weiter vorne als ein vorderes Ende (33e) des linken Außen-Abschnitts (33a) ist, und die zweite Licht-Austritts-Fläche (51b) der rechten Positions-Leuchte (50b) ist zumindest teilweise vor einem vorderen Ende (33f) des rechten Außen-Abschnitts (33b) angeordnet.

6. Das Spreiz-Sitz-Fahrzeug gemäß irgendeinem der Ansprüche 1 bis 5, **gekennzeichnet durch** eine Vorder-Gabel (20), die am Kopf-Rohr (10) um die Mittel-Achse (10a) des Kopf-Rohrs (10) drehbar gelagerte und
die Vorder-Abdeckung (30) unabhängig von der Vorder-Gabel (20) am Kopf-Rohr (10) gelagert ist, so dass die Vorder-Gabel (20) relativ zur Vorder-Abdeckung (30) drehbar ist.

7. Das Spreiz-Sitz-Fahrzeug gemäß irgendeinem der Ansprüche 1 bis 6, **dadurch gekennzeichnet, dass** jede des Paares von Positions-Leuchten (50a, 50b) weiterhin hat
eine Licht-Quelle (52), und
eine Licht-Führung (53), die konfiguriert ist, um Licht, das von der Licht-Quelle (52) erzeugt ist, durch die zweite Licht-Austritts-Fläche (51a, 51b) aus dem Fahrzeug heraus zu emittieren, und
der Licht-Führung (53) geformt ist, um sich in Fahrzeug-Oben-und-Unten-Richtung (V) in der Vorder-Ansicht des Fahrzeugs zu erstrecken.

8. Das Spreiz-Sitz-Fahrzeug gemäß Anspruch 7, **dadurch gekennzeichnet, dass** die Licht-Quelle (52) angeordnet ist, so dass Licht auf ein oberes Ende der Licht-Führung (53) fällt.

## Revendications

1. Véhicule à selle comprenant :
un tube de fourche (10),
un capot avant (30),
un bloc optique (40) comportant une première surface d'émission de lumière (41), et
une paire de feux de position gauche et droit (50a, 50b) comportant respectivement des secondes surfaces d'émission de lumière (51a, 51b), où
le capot avant (30) possède une surface avant (31) agencée en avant du tube de fourche (10) dans la direction avant arrière (L) du véhicule,
la bordure avant de la surface avant (31), dans une vue latérale du véhicule, s'étend le long d'une première ligne virtuelle (VL1) qui est parallèle à l'axe central (10a) du tube de fourche (10) dans la vue latérale du véhicule à une position située plus loin vers l'avant que le tube de fourche (10),
la première surface d'émission de lumière (41) du bloc optique (40) est disposée au niveau de la surface avant (31) du capot avant (30),
la seconde surface d'émission de lumière (51a) du feu de position gauche (50a) est disposée au niveau de la surface avant (31) du capot avant (30) à une position située plus loin à gauche que la première surface d'émission de lumière (41) dans la direction gauche droite (H) du véhicule et est espacée de la première surface d'émission de lumière (41) dans une vue avant du véhicule,
la seconde surface d'émission de lumière (51b) du feu de position droit (50b) est disposée au niveau de la surface avant (31) du capot avant (30) à une position située plus loin à droite que la première surface d'émission de lumière (41) dans la direction gauche droite (H) du véhicule et est espacée de la première surface d'émission de lumière (41) dans la vue avant du véhicule,
chacune des secondes surfaces d'émission de lumière (51a, 51b) s'étend dans la direction haut bas (V) du véhicule dans la vue avant du véhicule, où
chacune des secondes surfaces d'émission de lumière (51a, 51b) est plus grande que la première surface d'émission de lumière (41) dans la direction haut bas (V) du véhicule,
dans la vue avant du véhicule, la longueur (L51) de chacune des secondes surfaces d'émission de lumière (51a, 51b) dans la direction haut bas (V) du véhicule est plus grande que la largeur (W51) de chacune des secondes surfaces d'émission de lumière (51a, 51b) dans la direction gauche droite (H) du véhicule,
dans le cas où la surface avant (31) est visualisée dans une direction qui est inclinée de 45 degrés par rapport au plan vertical s'étendant dans la direction avant arrière (L) du véhicule depuis une position située obliquement plus loin à gauche et plus avant que le véhicule, la surface apparente de la première surface d'émission de lumière (41) est plus grande que la surface apparente de la seconde surface d'émission de lumière (51a) du feu de position gauche (50a),
dans le cas où la surface avant (31) est visualisée dans une direction qui est inclinée de 45 degrés par rapport au plan vertical s'étendant dans la direction avant arrière (L) du véhicule depuis une position située obliquement plus loin à droite et plus avant que le véhicule, la surface apparente de la première surface d'émission de lumière (41) est plus grande que la surface apparente de la seconde surface d'émission de lumière (51b) du feu de position droit (50b),
dans une vue latérale gauche du véhicule, la surface apparente de la seconde surface d'émission de lumière (51a) du feu de position gauche (50a) est plus grande que la surface apparente de la première surface d'émission de lumière (41), et
dans la vue latérale droite du véhicule, la surface apparente de la seconde surface d'émission de lumière (51b) du feu de position droit (50b) est plus grande que la surface apparente de la première surface d'émission de lumière (41), **caractérisé en ce que** :
dans la vue latérale gauche du véhicule, la distance minimale (S1) entre la première surface d'émission de lumière (41) et la seconde surface d'émission de lumière (51a) du feu de position gauche (50a) dans la direction orthogonale (O) à l'axe central (10a) du tube de fourche (10) est plus grande que la largeur maximale (W2) de la seconde surface d'émission de lumière (51a) du feu de position gauche (50a) dans la direction orthogonale (O) de l'axe central (10a) du tube de fourche (10), et
dans la vue latérale gauche du véhicule, la distance minimale (S1) entre la première surface d'émission de lumière (41) et la seconde surface d'émission de lumière (51b) du feu de position droit (50b) dans la direction orthogonale (O) à l'axe central (10a) du tube de fourche (10) est plus grande que la largeur maximale (W2) de la seconde surface d'émission de lumière (51b) du feu de position droit(50b) dans la direction orthogonale (O) de l'axe central (10a) du tube de fourche (10).

2. Véhicule à selle selon la revendication 1, **caractérisé en ce que** dans la vue latérale gauche du véhicule, la largeur maximale (W2) de la seconde surface d'émission de lumière (51a) du feu de position gauche (50a) dans la direction orthogonale (O) à l'axe central (10a) du tube de fourche (10) est plus grande que la largeur maximale (W1) de la première surface d'émission de lumière (41) dans la direction orthogonale (O) à l'axe central (10a) du tube de fourche (10), et
dans la vue latérale droite du véhicule, la largeur maximale (W2) de la seconde surface d'émission de lumière (51b) du feu de position droit (50b) dans la direction orthogonale (O) à l'axe central (10a) du tube de fourche (10) est plus grande que la largeur maximale (W1) de la première surface d'émission de lumière (41) dans la direction orthogonale (O) à l'axe central (10a) du tube de fourche (10) .

3. Véhicule à selle selon la revendication 1 ou la revendication 2, **caractérisé en ce que** dans la vue avant du véhicule, la largeur maximale (W41) de la première surface d'émission de lumière (41) dans la direction gauche droite (H) du véhicule est plus grande que la largeur maximale (W51) de chacune des secondes surfaces d'émission de lumière (51a, 51b) dans la direction gauche droite (H) du véhicule.

4. Véhicule à selle selon l'une quelconque des revendications 1 à 3, **caractérisé en ce que** le capot avant (30) comporte en outre une surface arrière (35) agencée à l'arrière du tube de fourche (10) dans la direction avant arrière (L) du véhicule,
la bordure arrière de la surface arrière (35) dans la vue latérale du véhicule s'étend le long d'une seconde ligne virtuelle (VL2) qui est parallèle à l'axe central (10a) du tube de fourche (10) dans la vue latérale du véhicule à une position située plus loin vers l'arrière que le tube de fourche (10), et la surface avant (31) et la surface arrière (35) sont opposées l'une à l'autre, le tube de fourche (10) étant intercalé entre celles-ci dans la vue latérale du véhicule.

5. Véhicule à selle selon l'une quelconque des revendications 1 à 4, **caractérisé en ce que** la surface avant (31) inclut :
une paire d'organes internes (32a, 32b) situés respectivement entre la première surface d'émission de lumière (41) et la seconde surface d'émission de lumière (51a) du feu de position gauche (50a) et entre la première surface d'émission de lumière (41) et la seconde surface d'émission de lumière (51b) du feu de position droit (50b) dans la vue avant du véhicule, et
une paire d'organes externes (33a, 33b) situés respectivement à une position plus loin à gauche que la seconde surface d'émission de lumière (51a) du feu de position gauche (50a) et à une position plus loin à droite que la seconde surface d'émission de lumière (51b) du feu de position droit (50b) dans la direction gauche droite (H) du véhicule dans la vue avant du véhicule, et
dans une section transversale horizontale d'une pièce avant du véhicule qui traverse la paire d'organes internes (32a, 32b) et la paire d'organes externes (33a, 33b), la seconde surface d'émission de lumière (51a) du feu de position gauche (50a) est au moins partiellement située à une position plus loin vers l'avant que l'extrémité avant (33e) de l'organe externe gauche (33a), et la seconde surface d'émission de lumière (51b) du feu de position droit (50b) est au moins partiellement située à l'avant de l'extrémité avant (33f) de l'organe externe droit (33b).

6. Véhicule à selle selon l'une quelconque des revendications 1 à 5, **caractérisé par** une fourche avant (20) supportée au niveau du tube de fourche (10) pour pouvoir tourner autour de l'axe central (10a) du tube de fourche (10), et
le capot avant (30) est supporté au niveau du tube de fourche (10) indépendamment de la fourche avant (20) de sorte à ce que la fourche avant (20) puisse tourner par rapport au capot avant (30).

7. Véhicule à selle selon l'une quelconque des revendications 1 à 6, **caractérisé en ce que** chacun de la paire de feux de position (50a, 50b) comporte en outre :
une source de lumière (52), et
un guide de lumière (53) configuré pour émettre vers l'extérieur du véhicule de la lumière générée par la source de lumière (52) au travers des secondes surfaces d'émission de lumière (51a, 51b), et
le guide de lumière (53) est formé pour s'étendre dans la direction haut bas (V) du véhicule dans la vue avant du véhicule.

8. Véhicule à selle selon la revendication 7, **caractérisé en ce que** la source de lumière (52) est disposée de sorte à ce que la lumière tombe sur l'extrémité supérieure du guide de lumière (53).
